# EUROPEAN PATENT APPLICATION

(11) **EP 4 809 877 A1**
(43) Date of publication of application: **23.09.2026**
(21) Application number: 25182082.5
(22) Date of filing: 11.06.2025
(51) Int. Cl.: A47J 37/06

(54) **OVEN**

(30) Priority: 17.03.2025 CN 202510315000; 17.03.2025 CN 202520471248 U
(71) Applicant: Mor Designs Ltd., Taipei 10547 (TW)
(72) Inventor: LIEN, Hung-Mei, 10547 Taipei (TW)
(74) Representative: MERH-IP Matias Erny Reichl Hoffmann Patentanwälte PartG mbB

(57) **Abstract**

The present application provides an oven, which relates to the technical field of cooking utensils. The oven includes an oven body assembly (100) and an oven cover assembly (200), the oven body assembly (100) includes a bracket (110) and an oven body (120) arranged on the bracket (110), the oven body (120)is provided with a heating cavity (1201), and the heating cavity (1201) is provided with a first cavity opening facing upward;; the oven cover assembly (200) includes a cover body (210), the cover body (210) is provided with an accommodating cavity (2101), and the accommodating cavity (2101) is provided with a second cavity opening; the cover body (210) is rotatably connected to the oven body (120), and the cover body (210) has a closed position located above the oven body (120) with the second cavity opening facing downward and covering the first cavity opening, and a first open position located below the oven body (120) with the second cavity opening facing upward, so that the oven body (120) is placed in the accommodating cavity (2101). This makes the lateral size of the oven smaller when it is opened, thus the portable of the oven is better and the user experience is improved.

## Description

### TECHNICAL FIELD

The present application relates to the technical field of cooking utensils, more particularly to an oven.

### BACKGROUND

The oven is a cooking utensil used for frying and grilling food, and is generally composed of an oven body and a cover body. At present, the cover body of some ovens is rotatably connected to the oven body by a rotating shaft structure, and the oven body is opened or closed by rotating the cover body; and the cover body of some ovens is integrally engaged with the oven body, and the oven body is opened or closed by removing the cover body from the oven body or engaging the cover body on the oven body.

However, when the rotary cover body with a rotating shaft structure is opened, a lateral overhanging structure will be formed, which will increase the lateral size of the oven, affect the movement and handling of the oven, and the poor stability of the rotating cover body will also have an impact during the movement of the oven. Although the detachable cover body will not increase the lateral size of the oven after being opened, the removed cover body needs to be carried and placed separately, which is easy to lose or damage, and the operation is also cumbersome when the cover body is engaged on the oven body. Therefore, the existing oven has the problem of poor portability.

### SUMMARY

An objective of the embodiments of the present application to provide an oven for solving the problem of poor portability of the existing oven.

In order to achieve the above objective, the present application provides an oven, which includes:
an oven body assembly, including a bracket and an oven body arranged on the bracket, wherein the oven body is provided with a heating cavity, and the heating cavity is provided with a first cavity opening facing upward;
an oven cover assembly, comprising a cover body; wherein the cover body is provided with an accommodating cavity, and the accommodating cavity is provided with a second cavity opening; the cover body is rotatably connected to the oven body, and the cover body is provided with: a closed position located above the oven body with the second cavity opening facing downward and covering the first cavity opening, and a first open position located below the oven body with the second cavity opening facing upward, so that the oven body is placed in the accommodating cavity.

In some embodiments, the oven cover assembly further includes a limiting plate arranged on the cover body, the limiting plate is provided with a limiting hole; and
the oven body assembly further includes a limiting component; the limiting component includes a limiting rod slidably arranged on the bracket, when the cover body is in the first open position, the limiting rod is capable of being inserted into the limiting hole to lock the cover body in the first open position.

In some embodiments, the limiting plate is further provided with a limiting groove, the limiting groove extends in an arc shape along a rotation axis of the cover body, and the limiting rod is capable of being slidably inserted into the limiting groove; and
when the cover body rotates, the limiting rod enables to abut against an inner wall of one of extension ends of the limiting groove to limit the cover body to the closed position, or to abut against an inner wall of another one of the extension ends of the limiting groove to limit the cover body to the second open position in which the second cavity opening is facing a horizontal direction and a part of the oven body is placed in the accommodating cavity.

In some embodiments, the limiting component further includes a first elastic member arranged on the bracket; the first elastic member is connected to the limiting rod and configured to apply an elastic force toward the limiting plate to the limiting rod.

In some embodiments, the limiting component further includes a knob connected to the limiting rod, a side of the knob facing the bracket is provided with a positioning protrusion, a side of the bracket facing the knob is provided with a first positioning groove and a second positioning groove, and a depth of the first positioning groove in a sliding direction of the limiting rod is smaller than that of the second positioning groove; and
the positioning protrusion is capable of being embedded in the first positioning groove to limit the limiting rod to an avoidance position spaced from the limiting plate, or embedded in the second positioning groove to enable the limiting rod to be inserted into the limiting hole or the limiting groove.

In some embodiments, the oven body assembly further includes at least one cooking plate, and the cooking plate is detachably connected to the heating cavity.

In some embodiments, an inner wall of the oven body is convexly provided with a first support portion and a second support portion, and a height of the first support portion is higher than that of the second support portion; and
an avoidance groove capable of being embedded in the first support portion is provided on a periphery of the cooking plate, and the cooking plate is provided with: a first mounting position where the avoidance groove is offset from the first support portion and abuts against the first support portion, a second mounting position where the first support portion is slidably embedded in the avoidance groove and abuts against the second support portion.

In some embodiments, the cooking plate is provided with a first bearing surface and a second bearing surface opposite to each other, and when the first bearing surface faces upward, the avoidance groove is offset from a position where the first support portion is located; when the second bearing surface faces upward, a position where the avoidance groove is located corresponds to the position where the first support portion is located, so that the first support portion is capable of being embedded in the avoidance groove.

In some embodiments, a positioning recess is provided on a periphery of the cooking plate;
the oven body assembly further includes a positioning pin slidably connected to the oven body, and the positioning pin is capable of being inserted into the positioning recess when the cooking plate is in the first mounting position and/or the second mounting position to limit the position of the cooking plate in the heating cavity.

In some embodiments, the oven cover assembly further includes a pressing plate arranged on the cover body, and when the cover body is in the first open position, the pressing plate is pressed on an end of the positioning pin facing away from the cooking plate to lock the positioning pin in a position inserted into the positioning recess.

In some embodiments, the oven body assembly further includes a second elastic member arranged on the oven body; the second elastic member is connected to the positioning pin and configured to apply an elastic force to the positioning pin in a direction facing away from the cooking plate, so as to drive the positioning pin to pop out of the positioning recess when the cover body is not in the first open position.

In some embodiments, the oven further includes an oil collecting assembly, the oil collecting assembly is provided with an oil collecting cavity and being mounted at a bottom of the oven body; and
the bottom of the oven body is provided with an oil discharge hole, and the oil discharge hole communicates the heating cavity with the oil collecting cavity.

In some embodiments, the oil collecting assembly includes:
a supporting member, a bottom of the oven body is provided with a mounting hole, the supporting member is penetrated in the mounting hole, and the supporting member is provided with a ventilation hole penetrating the supporting member in a vertical direction, the ventilation hole communicates the heating cavity with an external space; and
an oil cup, the oil cup comprises a base, an outer peripheral portion and an inner peripheral portion, the base is annular, the outer peripheral portion is arranged around an outer circle of the base, and the inner peripheral portion is arranged around the inner circle of the base, so that the base, the outer peripheral portion and the inner peripheral portion are jointly arranged to form the oil collecting cavity; and the inner peripheral portion is slidably sleeved on the supporting member in the vertical direction.

In some embodiments, the inner peripheral portion is threadedly connected to the supporting member.

In some embodiments, one of the inner peripheral portion and the supporting member is provided with a matching groove, and another one of the inner peripheral portion and the supporting member is provided with a matching protrusion, and the matching protrusion is slidably arranged in the matching groove; and
the matching groove includes a first matching section and a second matching section, the first matching section extends along an axial direction of the inner peripheral portion, and the second matching section extends along a circumferential direction of the peripheral portion and is communicated to a top of the first matching section.

In some embodiments, the matching groove further includes a third matching section, the third matching section extends in a spiral shape, and one end of the third matching section is communicated to the first matching section, and an other end is opened on a side facing away from the oven body.

In some embodiments, the oil collecting assembly further includes an oil shield disposed in the heating cavity, a top surface of the oil shield is an arc surface protruded upwardly, and the oil shield is located above the supporting member and connected to the supporting member and/or the oven body, and a projection of the oil shield on a top of the supporting member completely covers an opening of the ventilation hole.

In some embodiments, the cover body is provided with a vent;
the oven cover assembly further includes an adjusting sheet, the adjusting sheet is movably connected to the cover body to be able to close the vent, to cover a part of the vent or to offset from one side of the vent.

The oven provided by the present application has the beneficial effect that: compared with the prior art, the oven provided by the present application includes the oven body and the cover body rotatably connected to the oven body, and the cover body is provided with the accommodating cavity, so that the cover body can be flipped to the bottom of the oven body when being opened, and the oven body is placed in the accommodating cavity, therefore the lateral size of the oven when being opened is effectively reduced. At the same time, when the cover body is flipped to the position of accommodating the oven body, it can also protect and keep the oven body warm, so that the portable of the oven is well and the user experience is improved.

### DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.
FIG. 1 is a structural schematic diagram of an oven in an embodiment of the present application when a cover body is in the closed position;
FIG. 2 is a structural schematic diagram of an oven in an embodiment of the present application when a cover body is in the first open position;
FIG. 3 is an exploded view of an oven in an embodiment of the present application;
FIG. 4 is a side view of an oven in an embodiment of the present application;
FIG. 5 is a partial cross-sectional view in an A-A direction in FIG. 4;
FIG. 6 is a partial cross-sectional view of an oven in a first open position in an embodiment of the present application;
FIG. 7 is a partial cross-sectional view of an oven in a closed position in an embodiment of the present application;
FIG. 8 is a partial cross-sectional view of an oven in a second open position in an embodiment of the present application;
FIG. 9 is a partial exploded view of a connection relationship between a limiting component and a supporting leg in the embodiment of the present application;
FIG. 10 is a structural schematic diagram of a cooking plate in an embodiment of the present application;
FIG. 11 is a structural schematic diagram of another cooking plate in an embodiment of the present application;
FIG. 12 is a structural schematic diagram of a further cooking plate in an embodiment of the present application;
FIG. 13 is an exploded view of a connection between a cooking plate and an oven body in an embodiment of the present application;
FIG. 14 is a partial cross-sectional view in a B-B direction of FIG. 6;
FIG. 15 is a partial cross-sectional view in a C-C direction of FIG. 7;
FIG. 16 is a partial cross-sectional view in an A'-A' direction of FIG. 4;
FIG. 17 is another state diagram of FIG. 16;
FIG. 18 is an exploded view of a connection between an oven body and a first oil collecting assembly in an embodiment of the present application;
FIG. 19 is an exploded view of a connection between an oven body and a second oil collecting assembly in an embodiment of the present application;
FIG. 20 is a structural schematic diagram of a second oil collecting assembly in an embodiment of the present application, in which the matching protrusion is located in the first matching section;
FIG. 21 is a structural schematic diagram of a second oil collecting assembly in an embodiment of the present application, in which the matching protrusion is located in the second matching section;
FIG. 22 is a structural schematic diagram of a second oil collecting assembly in an embodiment of the present application, in which the matching protrusion is separated from the supporting member through the third matching section; and
FIG. 23 is an exploded view of a back side structure of a cover body in an embodiment of the present application.

The reference numerals in the figure are listed as following:
oven body assembly; 110-bracket; 111-supporting leg; 112-panel; 113-supporting rod; 1101-first positioning groove; 1102-second positioning groove; 1103-first assembly hole; 120-oven body; 1201-heating cavity; 121-first support portion; 122-second support portion; 1202-oil discharge hole; 1203-mounting hole; 1204-second assembly hole; 130-cooking plate; 131-annular outer edge; 132-frying plate; 133-grilling net; 1301-first bearing surface; 1302-second bearing surface; 1303-avoidance groove; 1304-positioning recess; 140-limiting component; 141-limiting rod; 142-first elastic member; 143-knob; 1431-positioning protrusion; 150-positioning pin; 160-second elastic member;
200-oven cover assembly; 210-cover body; 2101-accommodating cavity; 2102-avoidance hole; 2103-vent; 220-limiting plate; 2201-limiting hole; 2202-limiting groove; 230-handle; 240-pressing plate; 250-adjusting sheet; 2501-adjusting hole; 2502-connecting hole;
300-oil collecting assembly; 310-supporting member; 3101-ventilation hole; 3102-matching groove; 3102a-first matching section; 3102b-second matching section; 3102c-third matching section; 320-oil cup; 321-base; 322-outer peripheral portion; 323-inner peripheral portion; 3231-matching protrusion; 3201-oil collecting cavity; 330-oil shield; and
400-heating assembly; 410-combustion tube; 420-gas valve component; 430-control button.

### DETAILED DESCRIPTION OF EMBODIMENTS

In order to make the purpose, the technical solution and the advantages of the present application be clearer and more understandable, the present application will be further described in detail below with reference to accompanying figures and embodiments. It should be understood that the specific embodiments described herein are merely intended to illustrate but not to limit the present application.

It is noted that when a component is referred to as being "fixed to" or "arranged on" another component, it can be directly or indirectly on another component. When a component is referred to as being "connected to" another component, it can be directly or indirectly connected to another component.

In the description of the present application, it needs to be understood that, directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, which are only intended to describe the present application conveniently and simplify the description, but not to indicate or imply that an indicated device or component must have specific locations or be constructed and manipulated according to specific locations; therefore, these terms shouldn't be considered as any limitation to the present application.

In addition, terms "the first" and "the second" are only used in describe purposes, and should not be considered as indicating or implying any relative importance, or implicitly indicating the number of indicated technical features. As such, technical feature(s) restricted by "the first" or "the second" can explicitly or implicitly comprise one or more such technical feature(s). In the description of the present application, "a plurality of" means two or more, unless there is additional explicit and specific limitation.

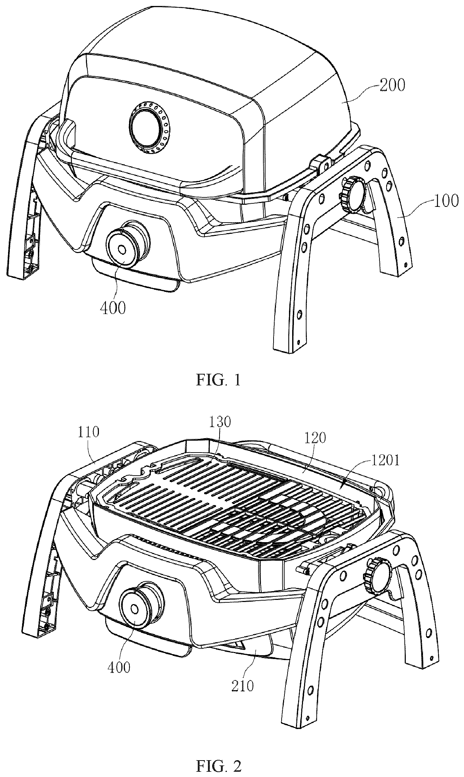

The present application embodiment provides an oven, as shown in FIGS. 1 to 3, the oven includes an oven body assembly 100 and an oven cover assembly 200.

The oven body assembly 100 includes a bracket 110 and an oven body 120 arranged on the bracket 110, the oven body 120 is provided with a heating cavity 1201, and the heating cavity 1201 is provided with a first cavity opening facing upward. Specifically, the oven body 120 is a shell structure with a hollow interior and an opened top, so as to form a heating cavity 1201 with a first cavity opening facing upward inside the oven body 120, and the heating cavity 1201 is used to accommodate the ingredients to be cooked. The oven body 120 can be made of metal materials or non-metallic materials such as high-strength plastics, and the shape of the oven body 120 can be arbitrary. In the embodiment, the overall shape of the oven body 120 is a rectangular prism.

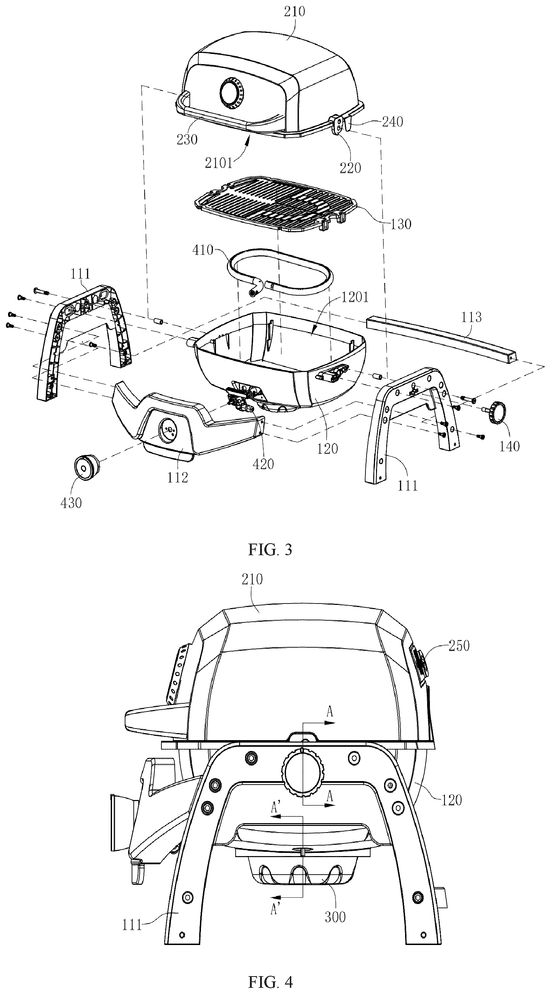

As shown in FIGS. 3 and 4, the bracket 110 is used to support the oven body 120 in a use position, such as a desktop, the ground, etc., so that the entire oven remains stable in position during use. The bracket 110 can also be made of metal material or non-metal material, and the bracket 110 can be set to any shape according to the shape of the oven body 120. In the present embodiment, the bracket 110 includes two supporting legs 111, a panel 112 and a supporting rod 113. The supporting legs 111 are inverted "U"-shaped structures, and the two supporting legs 111 are respectively located on both sides of the length direction of the oven body 120. The supporting legs 111 are fixedly connected to the corresponding side walls of the oven body 120 by screws. The panel 112 and the supporting rod 113 are respectively located on both sides of the width direction of the oven body 120. The panel 112 is located on the front side of the oven body 120. When in use, the panel 112 faces the user to improve the aesthetics. Control components for controlling the oven can also be arranged on the panel 112 to facilitate the operation of the user onto the oven. The supporting rod 113 is located at the rear side of the oven body 120, the two ends of the supporting rod 113 are respectively connected to the supporting legs 111 on both sides, and together with the panel 112, the structural strength of the supporting legs 111 on both sides is strengthened, so that the supporting legs 111 on both sides can stably support the oven body 120. Among them, the supporting legs 111 can support the oven body 120 above the use position, so that there is a certain space under the oven body 120 for the movement of the oven cover assembly 200.

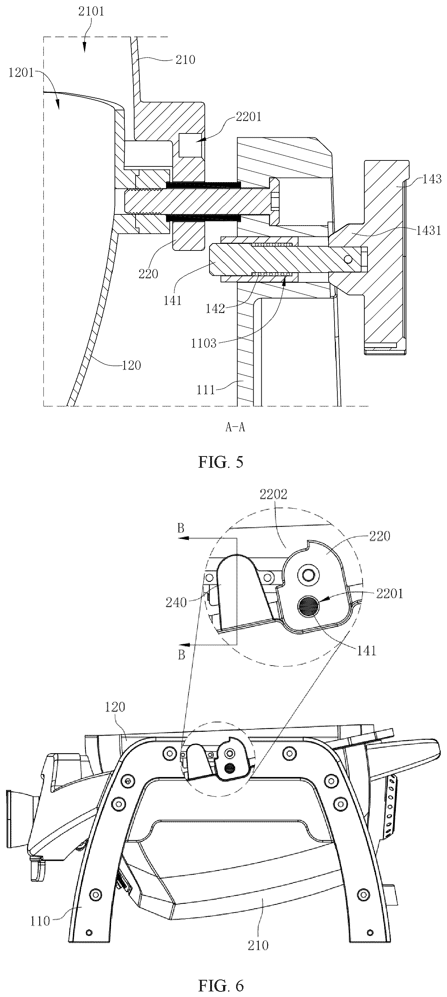

The oven cover assembly 200 includes a cover body 210, and the cover body 210 is provided with an accommodating cavity 2101, and the accommodating cavity 2101 is provided with a second cavity opening. The cover body 210 is rotatably connected to the oven body 120, and the cover body 210 has a closed position located above the oven body 120 with the second cavity opening facing downward and covering the first cavity opening, and a first open position located below the oven body 120 with the second cavity opening facing upward, so that the oven body 120 is placed in the accommodating cavity 2101. Specifically, the cover body 210 is also a shell structure with a hollow interior and an opening on one side. The shape of the cover body 210 matches the shape of the oven body 120, and the size of the cover body 210 is larger than that of the cover body 210, so as to form an accommodating cavity 2101 capable of accommodating the oven body 120 inside the cover body 210. The cover body 210 can be rotatably connected to the oven body 120 through a pin structure, for example, as shown in FIG. 5, the cover body 210 can be provided with a limiting plate 220 on both sides along the length direction thereof, and a through hole is provided on the limiting plate 220. A pin shaft is provided between the oven body 120 and each supporting leg 111. The limiting plate 220 is mounted between the oven body 120 and the supporting leg 111 on the corresponding side, and the pin shaft is penetrated through the through hole, so that the cover body 210 can rotate around the axis of the pin shaft. In the embodiment, the pin shaft can be located close to the first cavity opening of the oven body 120 and located in the middle position of the oven body 120, along the width direction of the oven body 120, and the limiting plate 220 is also located close to the second cavity opening of the cover body and located in the middle position of the cover body along the width direction of the cover body, so that the cover body can rotate around the axis of the pin shaft to the top or bottom of the oven body 120.

As shown in FIGS. 1 and 2, when the cover body 210 is in the closed position, the cover body 210 is located above the oven body 120, at this time the second cavity opening of the cover body 210 faces downward and covers the entire first cavity opening of the oven body 120 to close the heating cavity 1201. When the cover body 210 is rotated to the first open position, the cover body 210 is rotated to a position below the oven body 120, at this time the second cavity opening of the cover body 210 faces upward, the oven body 120 enters the accommodating cavity 2101 of the cover body 210, so that the first cavity opening of the heating cavity 1201 is completely exposed, thus the user can take or place the food in the heating cavity 1201.

When the cover body 210 is in the first open position, since the cover body 210 completely accommodates the oven body 120 in its accommodating cavity 2101, the lateral size of the oven when the oven cover assembly 200 is opened is greatly reduced, which is convenient for the user to carry and rotate the oven, thus the portability of the oven is improved. In addition, the cover body 210 can protect the oven body 120, and can also form a double-layer structure with the oven body 120, which has a certain heat insulation and heat preservation effect, so as to avoid the high temperature of the oven body 120 after use and cause burns to the user, and can also maintain the temperature in the heating cavity 1201.

The oven cover assembly 200 can also include a handle 230 arranged on the cover body 210, and the handle 230 can be mounted on the top or side of the cover body 210. The shape and size of the handle 230 can be set according to actual needs so as to facilitate the user to hold it. When the cover body 210 needs to be rotated, the user can hold the handle 230 and apply a certain force to drive the cover body 210 to rotate around the axis of the pin shaft, which further improves the convenience of the user.

As shown in FIG. 5, in some embodiments, the limiting plate 220 can also be provided with a limiting hole 2201. The oven body assembly 100 also includes a limiting component 140, and the limiting component 140 includes a limiting rod 141 slidably arranged on the bracket 110. When the cover body 210 is in the first open position, the limiting rod 141 can be inserted into the limiting hole 2201 to lock the cover body 210 in the first open position.

Specifically, the limiting rod 141 is a rod-shaped structure of a circular or other geometric shape. The limiting rod 141 can extend along the length direction of the oven body 120, a position on the supporting leg 111 of the bracket 110 corresponding to the limiting plate 220 is provided with a first assembly hole 1103. The limiting rod 141 is inserted into the first assembly hole 1103, so that the limiting rod 141 can slide toward or away from the limiting plate 220. The limiting hole 2201 is a through hole or a concave hole structure provided on the limiting plate 220. The shape of the limiting hole 2201 is the same as that of the limiting rod 141, so that the limiting rod 141 can be inserted into the inner side of the limiting hole 2201. The limiting hole 2201 is located on one side of the pin shaft. When the cover body 210 rotates around the pin shaft, the limiting hole 2201 also rotates to the position above or below the pin shaft.

As shown in FIG. 6, after the cover body 210 rotates to the first open position, the position of the limiting hole 2201 corresponds to the position of the limiting rod 141. At this time, the limiting rod 141 is inserted into the limiting hole 2201 to lock the rotation of the cover body 210, so that the cover body 210 is maintained in the first open position, the cover body 210 is prevented from rotating without operation, therefore the safety and stability of the oven are improved during use. When the limiting rod 141 is pulled out of the limiting hole 2201, the cover body 210 can be rotated back to the closed position.

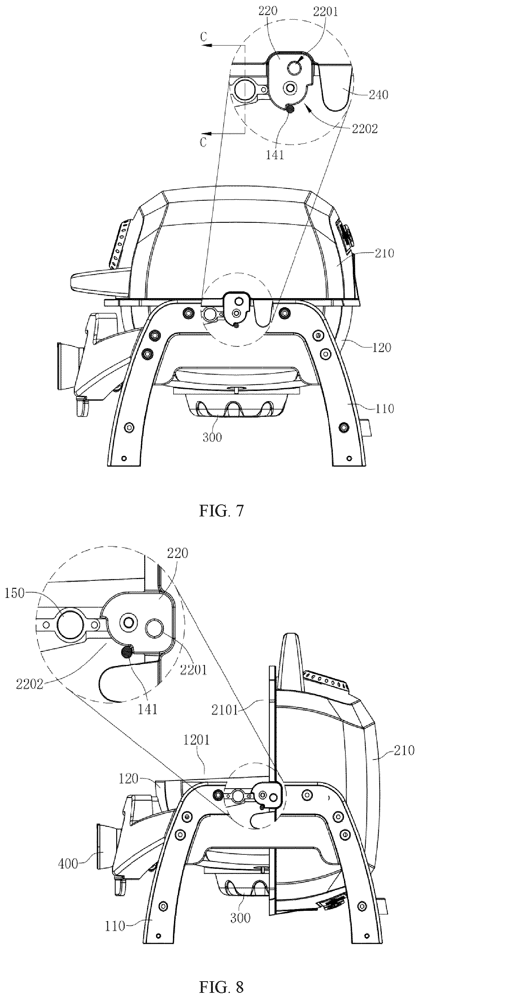

As shown in FIGS. 7 and 8, in some embodiments, the limiting plate 220 can further provide a limiting groove 2202. The limiting groove 2202 extends in an arc along the rotation axis of the cover body 210, and the limiting rod 141 can be slidably inserted into the limiting groove 2202. When the cover body 210 rotates, the limiting rod 141 can abut against the inner wall of one of the extension ends of the limiting groove 2202 to limit the cover body 210 to the closed position, or abut against the inner wall of the another one of the extension ends of the limiting groove 2202 to limit the cover body 210 to the second open position in which the second cavity is oriented in the horizontal direction and a part of the oven body 120 is placed in the accommodating cavity 2101.

Specifically, the limiting groove 2202 is a groove structure arranged on the circumference of the limiting plate 220, and the limiting groove 2202 extends around the circumference of the pin shaft. When the cover body 210 is in the closed position, the limiting rod 141 can be inserted into the limiting groove 2202 and abut against the inner wall of one of the extension ends of the limiting groove 2202. At this time, the cover body 210 is restricted by the limiting rod 141 and cannot continue to rotate in the direction away from the first open position, and the cover body 210 is maintained in the first open position under the action of gravity. Furthermore, when the cover body 210 is rotated toward the first open position, the limiting rod 141 will move relative to the limiting groove 2202. When the limiting rod 141 abuts against the inner wall of the other side extension end of the limiting groove 2202, the cover body 210 will also be restricted and cannot continue to rotate, so that the cover body 210 can hover in the second open position. The opening angle of the limiting groove 2202 can be set according to the hovering angle of the cover body 210 when the cover body 21 is in the second open position. In this embodiment, the opening angle of the limiting groove 2202 is 90°, so that the cover body 210 can be rotated 90° to the rear side from the closed position and then hover in a vertical posture. At this time, the second cavity opening of the cover body 210 faces the horizontal direction, and a part of the oven body 120 is placed in the accommodating cavity 2101 of the cover body 210, so that the first cavity opening of the oven body 120 can also be fully exposed, so that the user can temporarily open and close the cover body 210 during the cooking process. When the cover body 210 is rotated to the first open position, the limiting rod 141 can be disengaged from the limiting groove 2202.

Further, as shown in FIG. 6, the limiting component 140 further includes a first elastic member 142 arranged on the bracket 110, and the first elastic member 142 is connected to the limiting rod 141 and is used to apply an elastic force toward the limiting plate 220 to the limiting rod 141, so that the limiting rod 141 is maintained at the position inserted in the limiting groove 2202 or the limiting hole 2201, so as to prevent the limiting rod 141 from automatically disengaging from the limiting groove 2202 or the limiting hole 2201.

Specifically, the first elastic member 142 can be an elastic element such as a spring or a spring sheet. In this embodiment, the first elastic member 142 is a cylindrical coil spring. The first assembly hole 1103 provided on the supporting leg 111 can be a stepped hole. The limiting rod 141 is also provided with a stepped structure so that a cavity is formed between the first assembly hole 1103 and the limiting rod 141. The first elastic member 142 is mounted in a cavity and sleeved on the limiting rod 141. The two ends of the first elastic member 142 respectively abut against the inner wall of the first assembly hole 1103 and the end face of the limiting rod 141 to apply an elastic force to the limiting rod 141 in a direction towards the limiting plate 220.

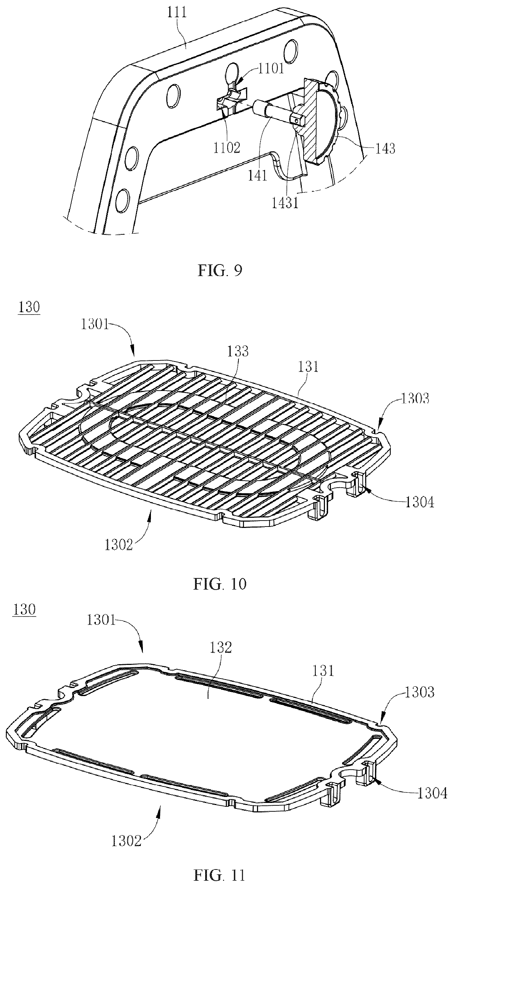

As shown in FIG. 9, in some embodiments, the limiting component 140 further includes a knob 143 connected to the limiting rod 141, and a positioning protrusion 1431 is provided on the side of the knob 143 facing the bracket 110. The side of the bracket 110 facing the knob 143 is provided with a first positioning groove 1101 and a second positioning groove 1102, the depth of the first positioning groove 1101 in a sliding direction of the limiting rod 141 is less than that of the second positioning groove 1102. The positioning protrusion 1431 can be embedded in the first positioning groove 1101 to limit the limiting rod 141 to an avoidance position spaced from the limiting plate 220, or embedded in the second positioning groove 1102 to enable the limiting rod 141 to be inserted into the limiting hole 2201 or the limiting groove 2202.

Specifically, the knob 143 can be arranged at the end of the limiting rod 141 away from the limiting plate 220, and the shape and size of the knob 143 can be set according to actual needs, so that the user can hold and operate the limiting rod 141 to move. In this embodiment, the knob 143 is disc-shaped, and the circumference of the knob 143 is provided with anti-slip patterns.

The first positioning groove 1101 and the second positioning groove 1102 are groove structures provided on the side of the bracket 110 facing the knob 143, and the first positioning groove 1101 and the second positioning groove 1102 can be staggered around the circumferential direction of the limiting rod 141. In this embodiment, the first positioning groove 1101 and the second positioning groove 1102 both extend along a radial direction of the first assembly hole 1103, and are staggered in a "cross" shape and arranged on the surface of the supporting leg 111 facing away from the oven body 120. The positioning protrusion 1431 is a convex block structure protruding from the knob 143 toward the bracket 110. The shape of the positioning protrusion 1431 matches the shape of the first positioning groove 1101 and the second positioning groove 1102, so that the positioning protrusion 1431 can be embedded in the first positioning groove 1101 or the second positioning groove 1102. The knob 143 and the limiting rod 141 can be rotated around their own axis, so that the positioning protrusion 1431 can be opposite to the position of the first positioning groove 1101 or the second positioning groove 1102.

When the positioning protrusion 1431 corresponds to the position of the first positioning groove 1101, the limiting rod 141 and the knob 143 move toward the limiting plate 220 under the action of the first elastic member 142. At this time, the positioning protrusion 1431 will be embedded in the first positioning groove 1101. The first positioning groove 1101 is used to limit the movement of the limiting rod 141 toward the limiting plate 220, so that there is a certain distance between the limiting rod 141 and the limiting plate 220, so as to form an avoidance position. The limiting rod 141 will not be inserted into the limiting hole 2201 or the limiting groove 2202, thereby avoiding interference between the limiting rod 141 and the limiting plate 220 during the rotation of the cover body 210. When the knob 143 is rotated so that the positioning protrusion 1431 corresponds to the position of the second positioning groove 1102, the positioning protrusion 1431 can be embedded in the second positioning groove 1102. Since the second positioning groove 1102 has a large depth, the limiting rod 141 can continue to move from the avoidance position to the direction of the limiting plate 220 and insert into the limiting hole 2201 or the limiting groove 2202 to limit the rotation of the cover body 210.

In addition, when the positioning protrusion 1431 is embedded in the first positioning groove 1101 or the second positioning groove 1102, the rotation of the knob 143 can be limited to prevent the knob 143 from rotating by itself and causing the positioning protrusion 1431 to be separated from the first positioning groove 1101 or the second positioning groove 1102, therefore the stability of the limiting rod 141 is improved during use.

As shown in FIGS. 2 and 3, in some embodiments, the oven body assembly 100 also includes at least one cooking plate 130, and the cooking plate 130 is detachably connected to the heating cavity 1201.

Specifically, the cooking plate 130 is a plate-shaped structure for placing the ingredients to be cooked. The cooking plate 130 can be made of high-temperature resistant and easy-to-clean materials such as metal and ceramic. The shape of the cooking plate 130 matches the inner shape of the heating cavity 1201 so that the cooking plate 130 can be mounted in the heating cavity 1201. The cooking plate 130 can be detachably connected to the heating cavity 1201 by means of a snap structure, a slot structure, a threaded connection, etc., so that the user can clean and replace the cooking plate 130.

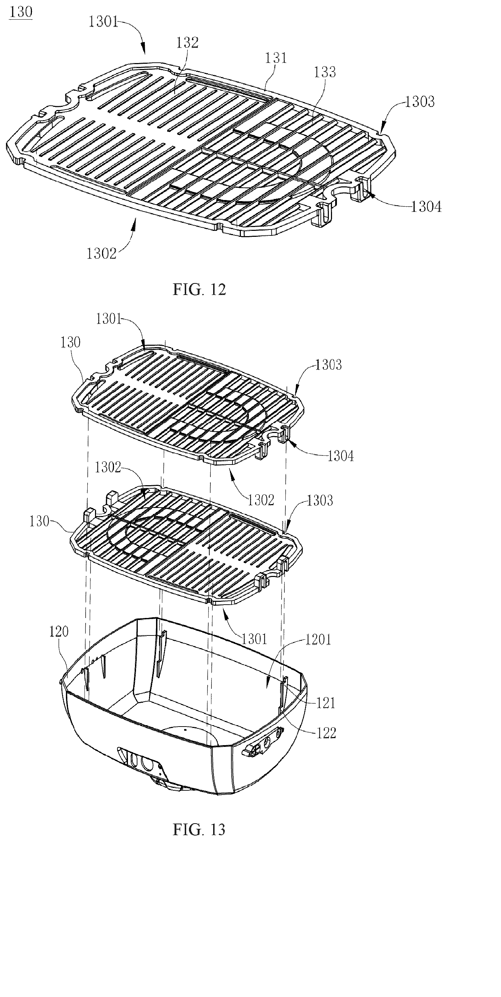

Optionally, as shown in FIG. 10, the cooking plate 130 includes an annular outer edge 131 and a frying plate 132 disposed inside the annular outer edge 131. The frying plate 132 is a solid plate structure, which can grill and cook the ingredients placed on the frying plate 132. Optionally, as shown in FIG. 11, the cooking plate 130 includes an annular outer edge 131 and a grilling net 133 disposed inside the annular outer edge 131, and the grilling net 133 is a grid-like structure, and can grill and cook the food placed on the grilling net 133. Optionally, as shown in FIG. 12, the cooking plate 130 can further include an annular outer edge 131, a frying plate 132, and a grilling net 133, and the frying plate 132 and the grilling net 133 are disposed side by side inside the annular outer edge 131, so that frying and grilling can be performed on the cooking plate 130 at the same time.

By providing the cooking plates 130 with various structures, the user can select a suitable cooking plate 130 for use according to cooking needs, therefore the practicality and flexibility of the oven are improved. For example, when the user needs to fry the ingredients, the cooking plate 130 with a frying plate 132 can be selected; when the user needs to bake the ingredients, the cooking plate 130 with a grilling net 133 can be selected; when the user wants to fry and bake at the same time, the cooking plate 130 with both a frying plate 132 and a grilling net 133 can be selected.

Further, as shown in FIG. 13, the inner wall of the oven body 120 is convexly provided with a first support portion 121 and a second support portion 122, and the height of the first support portion 121 is higher than that of the second support portion 122. The cooking plate 130 is provided with an avoidance groove 1303 on the circumference thereof for the first support portion 121 to be embedded in the avoidance groove 1303. The cooking plate 130 has: a first mounting position where the avoidance groove 1303 is offset from the first support portion 121 and abuts against the first support portion 121, and a second mounting position where the first support portion 121 is slidably embedded in the avoidance groove 1303 and abuts against the second support portion 122.

Specifically, the first support portion 121 and the second support portion 122 are protruding structures for supporting the cooking plate 130. In this embodiment, the first support portion 121 and the second support portion 122 are protruding at the same position on the inner wall of the oven body 120, and the first support portion 121 and the second support portion 122 are integrally formed. The first support portion 121 and the second support portion 122 have different heights, and the second support portion 122 is closer to the inner side of the heating cavity 1201. When the cooking plate 130 is mounted in the heating cavity 1201, the cooking plate 130 is limited by the first support portion 121 and the second support portion 122 to prevent the cooking plate 130 from shaking or falling off in the heating cavity 1201.

The avoidance groove 1303 is a groove structure provided on the circumference of the cooking plate 130. In this embodiment, the avoidance groove 1303 is provided on the annular outer edge 131 of the cooking plate 130. The shape of the avoidance groove 1303 matches the shape of the first support portion 121, so that the first support portion 121 can be embedded in the avoidance groove 1303. When the cooking plate 130 is mounted in the heating cavity 1201, the avoidance groove 1303 can be offset from the first support portion 121 by moving the cooking plate 130, so that the cooking plate 130 can abut against the first support portion 121 to form a first mounting position, and at this time, the cooking plate 130 is located at a higher position in the heating cavity 1201. Alternatively, the avoidance groove 1303 is aligned with the first support portion 121, the first support portion 121 is slidably embedded in the avoidance groove 1303, and the cooking plate 130 is continuously moved until the first support portion 121 slides to the bottom of the avoidance groove 1303 and abuts against the second support portion 122, to form a second mounting position, at which time the cooking plate 130 is located at a lower position in the heating cavity 1201.

In this embodiment, four avoidance grooves 1303 are arranged on the circumference of the cooking plate 130, and two groups of first support portions 121 and second support portions 122 are respectively arranged on the inner walls of both sides of the oven body 120 along the width direction of the oven body 120, so that multiple first support portions 121 or multiple second support portions 122 are simultaneously supported at multiple positions of the cooking plate 130, therefore the stability and bearing capacity of the cooking plate 130 in the oven body 120 are improved.

By providing the first support portion 121 and the second support portion 122, and using the avoidance groove 1303, the mounting position of the cooking plate 130 in the heating cavity 1201 can be adjusted according to cooking requirements, therefore the practicality and flexibility of the oven are improved. For example, when the food needs to be fried, the cooking plate 130 can be mounted in the first mounting position, so that the frying plate 132 is close to the top of the heating cavity 1201, therefore the efficiency of frying and cooking are improved; when the food needs to be baked, the cooking plate 130 can be mounted in the second mounting position, so that the grilling net 133 is close to the bottom of the heating cavity 1201, thereby facilitating the uniform heating of the food and improving the effect of baking and cooking.

In addition, two cooking plates 130 can be mounted in the heating cavity 1201 at the same time, so that one cooking plate 130 abuts against the first support portion 121, and another cooking plate 130 abuts against the second support portion 122. The two cooking plates 130 are arranged in the heating cavity 1201 in an upper and lower interval, and two different ingredients can be cooked at the same time, which improves the cooking efficiency and practicality of the oven. For example, the user can fry on the upper cooking plate 130, such as frying eggs and frying meat, and bake on the lower cooking plate 130, such as grilling fish and grilling skewers, so as to achieve the function of cooking multiple ingredients at the same time.

Further, in combination with FIGS. 10 to 13, the cooking plate 130 is provided with a first bearing surface 1301 and a second bearing surface 1302 opposite to each other. When the first bearing surface 1301 faces upward, the avoidance groove 1303 is arranged to be offset from the position where the first support portion is located 121; when the second bearing surface 1302 faces upward, the position of the avoidance groove 1303 corresponds to the position where the first support portion is located 121, so that the first support portion 121 can be embedded in the avoidance groove 1303.

Specifically, the two side surfaces of the cooking plate 130 can be symmetrically structured, so that the first bearing surface 1301 and the second bearing surface 1302 opposite to each other are formed on the two side surfaces of the cooking plate 130. The arrangement position of the avoidance groove 1303 is an asymmetrical structure relative to the center point of the cooking plate 130, so that the position of the avoidance groove 1303 can be changed by flipping the cooking plate 130, so that the avoidance groove 1303 can be offset or correspond to the first support portion 121. When the first bearing surface 1301 faces upward, the first bearing surface 1301 of the cooking plate 130 is used to place food, the avoidance groove 1303 is staggered with the first support portion 121, and the cooking plate 130 can abut against the first support portion 121. When the second bearing surface 1302 faces upward, the second bearing surface 1302 of the cooking plate 130 is used to place food, the position of the avoidance groove 1303 corresponds to the position where the first support portion is located 121, the first support portion 121 can be embedded in the avoidance groove 1303, and the cooking plate 130 abuts against the second support portion 122.

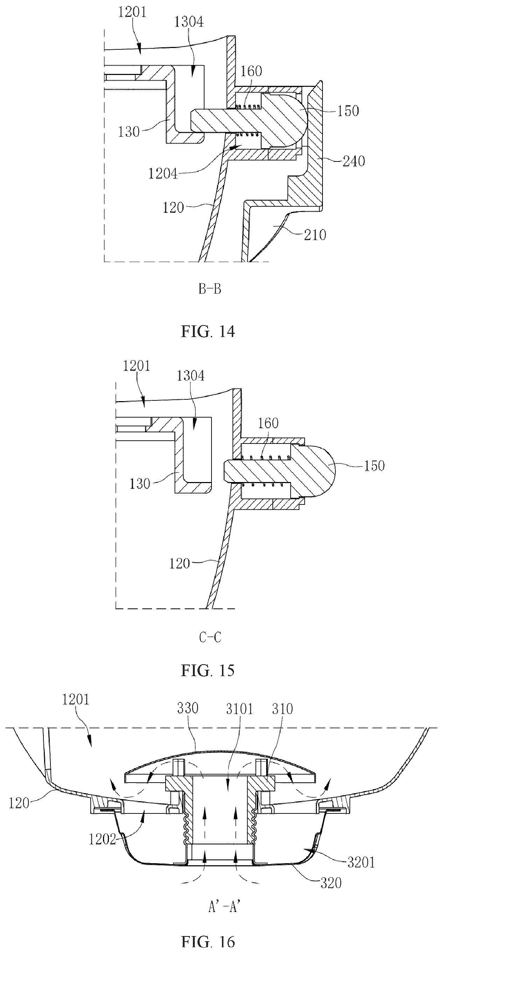

As shown in FIGS. 14 and 15, further, a positioning recess 1304 is provided on the circumference of the cooking plate 130. The oven body assembly 100 further includes a positioning pin 150 slidably connected to the oven body 120. The positioning pin 150 can be inserted into the positioning recess 1304 when the cooking plate 130 is in the first mounting position and/or the second mounting position to limit the position of the cooking plate 130 in the heating cavity 1201.

Specifically, the positioning recess 1304 is a hole-shaped structure provided on the circumference of the cooking plate 130. In this embodiment, the annular outer edge 131 of the cooking plate 130 is provided with a protrusion protruding toward the second bearing surface 1302, and the positioning recess 1304 is provided on the protrusion. The shape and size of the positioning recess 1304 can be set according to actual needs. The positioning pin 150 is a columnar structure slidably connected to the oven body 120. The oven body 120 can be provided with a second assembly hole 1204, and the positioning pin 150 can be slidably inserted into the second assembly hole 1204. The shape of the end of the positioning pin 150 facing the inner side of the oven body 120 matches the shape of the positioning recess 1304, so that the positioning pin 150 can be inserted into the positioning recess 1304.

As shown in FIG. 14, in this embodiment, the positioning pin 150 is correspondingly arranged on the cooking plate 130 in the first mounting position, so that the positioning pin 150 can be inserted into the positioning recess 1304 to limit the position of the cooking plate 130, and to ensure that the cooking plate 130 is in a stable position in the heating cavity 1201.

In this embodiment, two positioning pins 150 are provided, and the two positioning pins 150 are respectively slidably connected to the two sides of the oven body 120; two positioning recesses 1304 are respectively provided at both ends of the cooking plate 130 along the length direction of the cooking plate 130, and the positioning recesses 1304 on both sides are symmetrically structured at the center of the cooking plate 130, so that the cooking plate 130 can still be mounted in the heating cavity 1201 after being horizontally rotated 180° with the first bearing surface 1301 facing upward, and the positioning pin 150 corresponds to the position of one of the positioning recesses 1304.

Further, the oven cover assembly 200 also includes a pressing plate 240 provided on the cover body 210. When the cover body 210 is in the first open position, the pressing plate 240 is pressed on the end of the positioning pin 150 facing away from the cooking plate 130 to lock the positioning pin 150 in the position inserted into the positioning recess 1304.

Specifically, the pressing plate 240 is a plate-shaped structure arranged on the side of the cover body 210 facing the oven body 120. In this embodiment, the pressing plate 240 is located on one side of the length direction of the cover body 210 and is spaced apart from the limiting plate 220. After the cover body 210 rotates to the first open position, the pressing plate 240 can be pressed on the end of the positioning pin 150 facing away from the cooking plate 130, and a force is applied to the positioning pin 150 in the direction of the cooking plate 130, so that the positioning pin 150 can be stably inserted into the positioning recess 1304, and the positioning pin 150 is prevented from automatically falling out of the positioning recess 1304. At this time, when the cover body 210 is in the first open position, the cooking plate 130 can be stably positioned in the heating cavity 1201, and will not shake or fall off during the process of moving the oven, therefore the stability and safety of the oven are improved during use.

Furthermore, the oven body assembly 100 also includes a second elastic member 160 arranged on the oven body 120, and the second elastic member 160 is connected to the positioning pin 150, and configured to apply an elastic force to the positioning pin 150 in the direction opposite to the cooking plate 130, so as to drive the positioning pin 150 to pop out of the positioning recess 1304 when the cover body 210 is not in the first open position.

Specifically, the second elastic member 160 can be an elastic element such as a spring or a spring sheet. In this embodiment, the second elastic member 160 is a cylindrical coil spring. The second assembly hole 1204 can be a stepped hole, and the positioning pin 150 is also provided with a stepped structure, so that a cavity is formed between the second assembly hole 1204 and the positioning pin 150 for accommodating and mounting the second elastic member 160. One end of the second elastic member 160 abuts against the inner wall of the second assembly hole 1204, and another end abuts against the positioning pin 150, so as to apply an elastic force to the positioning pin 150 in the direction opposite to the cooking plate 130.

When the cover body 210 is not in the first open position, the second elastic member 160 can drive the positioning pin 150 to pop out of the positioning recess 1304. At this time, the positioning pin 150 will not limit the position of the cooking plate 130 in the heating cavity 1201, and the user can adjust the cooking plate 130 according to cooking needs.

In some embodiments, the oven further includes an oil collecting assembly 300. The oil collecting assembly 300 is provided with an oil collecting cavity 3201 and is mounted at the bottom of the oven body 120. The bottom of the oven body 120 is provided with an oil discharge hole 1202, and the oil discharge hole 1202 communicates the heating cavity 1201 and the oil collecting cavity 3201, so that the grease generated in the heating cavity 1201 can be discharged into the oil collecting cavity 3201 through the oil discharge hole 1202 during the cooking process of the food, so as to avoid the accumulation of grease in the heating cavity 1201, which is convenient for the user to clean the grease, and at the same time, the heating cavity 1201 can be kept clean and hygienic.

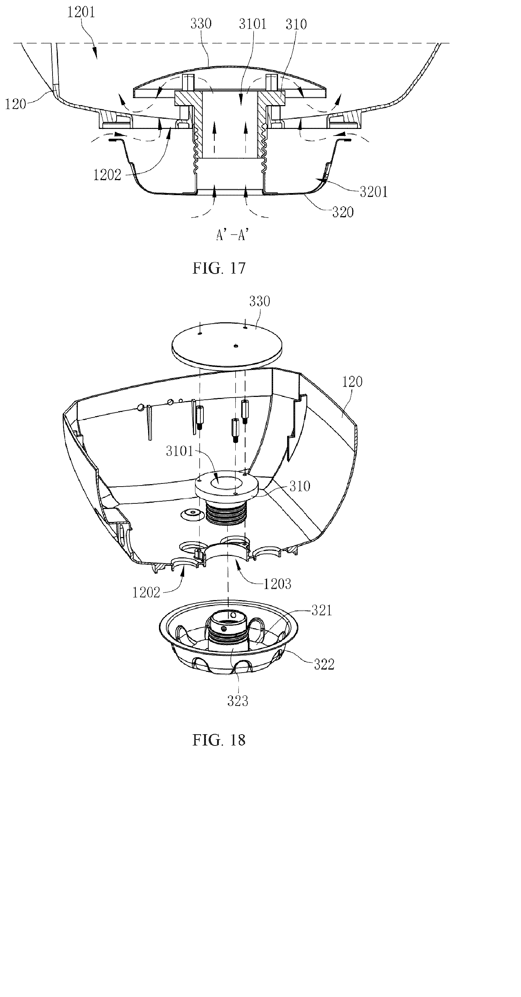

As shown in FIGS. 16 and 17, in some embodiments, the oil collecting assembly 300 can include a supporting member 310 and an oil cup 320. The bottom of the oven body 120 is provided with a mounting hole 1203, the supporting member 310 is inserted into the mounting hole 1203, and the supporting member 310 is provided with a ventilation hole 3101 penetrating in the vertical direction, the ventilation hole 3101 communicates the heating cavity 1201 with the external space; the oil cup 320 includes a base 321, an outer peripheral portion 322 and an inner peripheral portion 323, the base 321 is annular, the outer peripheral portion 322 is arranged around the outer circle of the base 321, and the inner peripheral portion 323 is arranged around the inner circle of the base 321, so that the base 321, the outer peripheral portion 322 and the inner peripheral portion 323 are jointly arranged to form the oil collecting cavity 3201; the inner peripheral portion 323 is slidably sleeved on the supporting member 310 in the vertical direction.

Specifically, the supporting member 310 is a columnar structure for supporting the oil cup 320. In this embodiment, the supporting member 310 is inserted into the mounting hole 1203 at the bottom of the oven body 120, and the length direction of the supporting member 310 is arranged along the vertical direction. The ventilation hole 3101 provided on the supporting member 310 is used to ensure the ventilation of the heating cavity 1201 to avoid incomplete combustion due to lack of oxygen in the heating cavity 1201 during cooking. The shape and size of the ventilation hole 3101 can be set according to actual needs to ensure the ventilation of the heating cavity 1201.

The oil cup 320 is a container for collecting grease, and the base 321, the outer peripheral portion 322 and the inner peripheral portion 323 are jointly arranged to form an oil collecting cavity 3201, and the oil collecting cavity 3201 is used to accommodate grease discharged from the heating cavity 1201. The inner peripheral portion 323 of the oil cup 320 is slidably sleeved on the supporting member 310 in the vertical direction, so that the oil cup 320 can move up and down relative to the supporting member 310.

The oil cup 320 can move upward to a state where the top of the outer periphery portion abuts against the bottom of the oven body 120, at which time the cavity of the oil collecting cavity 3201 is closed, and the grease will not flow out of the oil collecting cavity 3201 during the movement of the oven. The oil cup 320 can also move downward to a state where the outer periphery portion is spaced from the oven body 120, at which time the cavity of the oil collecting cavity 3201 is opened, and the oil discharge hole 1202 is exposed, and the outside air can also enter the heating cavity 1201 through the oil discharge hole 1202, therefore the air intake of the heating cavity 1201 is increased.

Optionally, as shown in FIG. 18, the inner peripheral portion 323 is threadedly connected to the supporting member 310 to adjust the height of the oil cup 320 by rotating the oil cup 320.

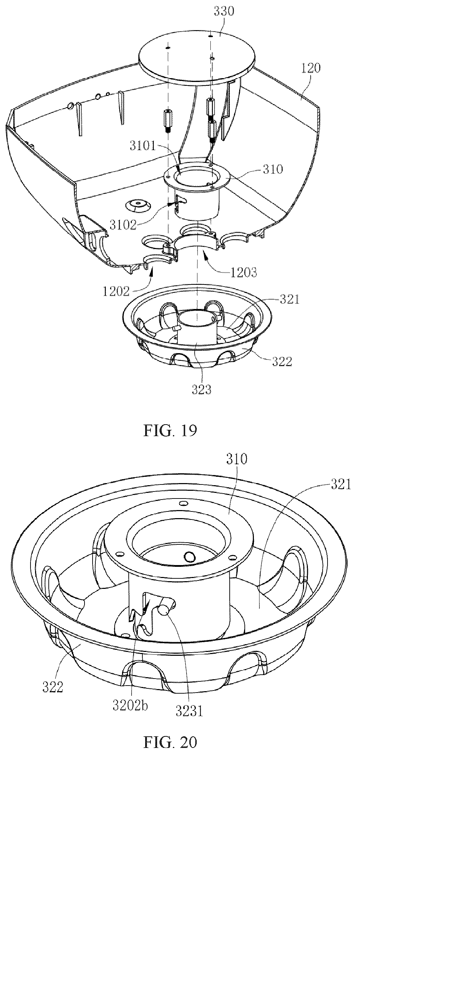

Optionally, as shown in FIGS. 19 to 22, one of the inner peripheral portion 323 and the supporting member 310 is provided with a matching groove 3102, and another one is provided with a matching protrusion 3231, and the matching protrusion 3231 is slidably arranged in the matching groove 3102; the matching groove 3102 includes a first matching section 3102a and a second matching section 3102b, the first matching section 3102a extends along the axial direction of the inner peripheral portion 323, and the second matching section 3102b extends along the circumferential direction of the peripheral portion and is connected to the top of the first matching section 3102a.

When the matching protrusion 3231 is placed in the second matching section 3102b of the matching groove 3102, the top of the oil cup 320 abuts against the bottom of the oven body 120 to close the cavity opening of the oil collecting cavity 3201. When the oil cup 320 is rotated to make the matching protrusion 3231 slide into the first matching section 3102a, and the oil cup 320 moves downward to the bottom of the first matching section 3102a, the oil cup 320 is spaced apart from the oven body 120, exposing the oil discharge hole 1202 and the cavity of the oil collecting cavity 3201, therefore the air intake is increased.

Furthermore, the matching groove 3102 also includes a third matching section 3102c. The third matching section 3102c extends in a spiral manner, and one end of the third matching section 3102c is connected with the first matching section 3102a, and another end is open at the side facing away from the oven body 120, so that the matching protrusion 3231 can be disengaged from the matching groove 3102 along the third matching section 3102c, thereby facilitating the user to disassemble and clean the oil cup 320.

Furthermore, the oil collecting assembly 300 may also include an oil shield 330 disposed in the heating cavity 1201, the top surface of the oil shield 330 is an arc surface protruded upwardly, and the oil shield 330 is located above the supporting member 310 and connected to the supporting member 310 and/or the oven body 120, and the projection of the oil shield 330 on the top of the supporting member 310 completely covers the opening of the ventilation hole 3101 to prevent the grease from dripping into the ventilation hole 3101 during the baking process. At the same time, the arc-shaped oil shield 330 can guide the grease to flow along the inner peripheral portion 323, so as to further ensure that the grease is discharged smoothly. In this embodiment, the oil shield 330 is fixed to the top of the supporting member 310 through a plurality of connectors, and is spaced from the top of the supporting member 310 to ensure the air flow of the ventilation hole 3101.

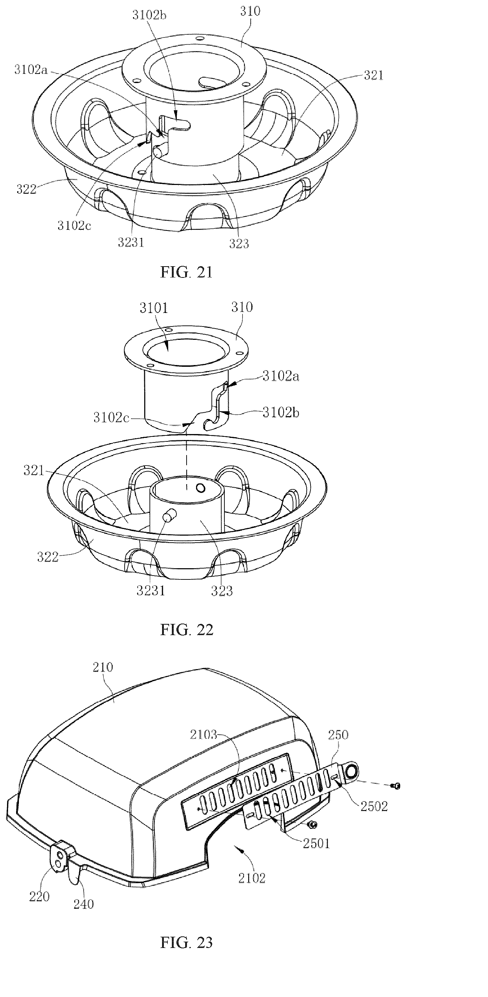

In some embodiments, as shown in FIG. 23, the cover body 210 is further provided with a vent 2103; the oven cover assembly 200 further includes an adjusting sheet 250, which is movably connected to the cover body 210 so as to be able to close the vent 2103, partially block the vent 2103, or avoid one side of the vent 2103.

Specifically, the vent 2103 is a hole-shaped structure provided on the cover body 210, which is used to ensure the ventilation of the oven during the cooking process. The vent 2103 can be set at any position of the cover body 210. In this embodiment, the vent 2103 is provided on the back side of the cover body 210 so that the hot air flow is discharged in a direction away from the user. In this embodiment, multiple vents 2103 are provided, and the multiple vents 2103 are arranged at intervals along the length direction of the oven body 120. The adjusting sheet 250 is a plate-like structure. The adjusting sheet 250 can be provided with the same number of adjusting holes 2501 as the vents 2103. The shape and size of the adjusting holes 2501 are the same as those of the vents 2103. The adjusting sheet 250 can be slidably connected with the cover body 210. In this embodiment, a connecting hole 2502 is provided on each side of the adjusting sheet 250. The extending direction of the connecting hole 2502 is parallel to the extending direction of the adjusting sheet 250. The adjusting sheet 250 is mounted on the cover body 210 by passing a screw through the connecting hole 2502, so that the adjusting sheet 250 can slide along the extending direction of the adjusting sheet 250. The adjusting sheet 250 ca cover the vents 2103, or the adjusting holes 2501 on the adjusting sheet 250 can partially overlap with the vents 2103, or the adjusting holes 2501 can be fully connected with the vents 2103, so as to realize different openings of the vents 2103 to control the air flow in the oven, and meet different cooking requirements. For example, when quick grilling or keeping the internal food warm is required, the adjusting sheet 250 can close the vent 2103 to reduce heat loss; when the food needs to be stewed over a low fire, the vent 2103 can be opened to a certain area to increase the air circulation and make the heating cavity reach a stewing temperature with lower heat.

In some embodiments, as shown in FIG. 3, the oven can further include a heating assembly 400, which is arranged on the oven body 120 and/or the bracket 110, and is used to heat the cooking plate 130. In this embodiment, the heating assembly 400 can include a combustion tube 410, a gas valve component 420, and a control button 430. The combustion tube 410 is arranged in a ring shape inside the heating cavity 1201, the gas valve component 420 is fixed between the panel 112 and the oven body 120, one end of the combustion tube 410 extends to the outside of the oven body 120 and is connected to the gas valve component 420, and the knob 143 is arranged on the side of the panel 112 facing away from the oven body 120 and is connected to the gas valve component 420, so that the gas valve component 420 can be controlled by the knob 143. Furthermore, as shown in FIG. 23, an avoidance hole 2102 can be provided on the back side of the cover body 210. When the cover body 210 is rotated to the first open position, the avoidance hole 2102 corresponds to the position of the gas valve component 420, which avoids position interference between the cover body 210 and the gas valve component 420.

The above description is only a preferred embodiment of the present application and is not intended to limit the present application. Any modification, equivalent replacement and improvement made within the spirit and principle of the present application shall be included in the protection scope of the present application.

## Claims

1. An oven, comprising:
an oven body assembly (100), comprising a bracket (110) and an oven body (120) arranged on the bracket (110), wherein the oven body (120) is provided with a heating cavity (1201), and the heating cavity (1201) is provided with a first cavity opening facing upward;
an oven cover assembly (200), comprising a cover body (210); wherein the cover body (210) is provided with an accommodating cavity (2101), and the accommodating cavity (2101) is provided with a second cavity opening; the cover body (210) is rotatably connected to the oven body (120), and the cover body (210) has a closed position located above the oven body (120) with the second cavity opening facing downward and covering the first cavity opening, and a first open position located below the oven body (120) with the second cavity opening facing upward, so that the oven body (120) is placed in the accommodating cavity (2101).

2. The oven according to claim 1, wherein the oven cover assembly (200) further comprises a limiting plate (220) arranged on the cover body (210), the limiting plate (220) is provided with a limiting hole (2201); and
the oven body assembly (100) further comprises a limiting component (140); the limiting component (140) comprises a limiting rod (141) slidably arranged on the bracket (110); and when the cover body (210) is in the first open position, the limiting rod (141) is capable of being inserted into the limiting hole (2201) to lock the cover body (210) in the first open position.

3. The oven according to claim 2, wherein the limiting plate (220) is further provided with a limiting groove (2202), the limiting groove (2202) extends in an arc shape along a rotation axis of the cover body (210), and the limiting rod (141) is capable of being slidably inserted into the limiting groove (2202); and
when the cover body (210) rotates, the limiting rod (141) enables to abut against an inner wall of one of extension ends of the limiting groove (2202) to limit the cover body (210) to the closed position, or to abut against an inner wall of another one of the extension ends of the limiting groove (2202) to limit the cover body (210) to the second open position in which the second cavity opening is facing a horizontal direction and a part of the oven body (120) is placed in the accommodating cavity (2101).

4. The oven according to claim 3, wherein the limiting component (140) further comprises a first elastic member (142) arranged on the bracket (110); the first elastic member (142) is connected to the limiting rod (141) and configured to apply an elastic force toward the limiting plate (220) to the limiting rod (141).

5. The oven according to claim 4, wherein the limiting component (140) further comprises a knob (143) connected to the limiting rod (141), a side of the knob (143) facing the bracket (110) is provided with a positioning protrusion (1431), a side of the bracket (110) facing the knob (143) is provided with a first positioning groove (1101) and a second positioning groove (1102), and a depth of the first positioning groove (1101) in a sliding direction of the limiting rod (141) is smaller than that of the second positioning groove (1102); and
the positioning protrusion (1431) is capable of being embedded in the first positioning groove (1101) to limit the limiting rod (141) to an avoidance position spaced from the limiting plate (220), or embedded in the second positioning groove (1102) to enable the limiting rod (141) to be inserted into the limiting hole (2201) or the limiting groove (2202).

6. The oven according to claim 1, wherein the oven body assembly (100) further comprises at least one cooking plate (130), and the cooking plate (130) is detachably connected to the heating cavity (1201).

7. The oven according to claim 6, wherein an inner wall of the oven body (120) is convexly provided with a first support portion (121) and a second support portion (122), and a height of the first support portion (121) is higher than that of the second support portion (122); and
an avoidance groove (1303) capable of being embedded in the first support portion (121) is provided on a periphery of the cooking plate (130), and the cooking plate (130) is provided with: a first mounting position where the avoidance groove (1303) is offset from the first support portion (121) and abuts against the first support portion (121), and a second mounting position where the first support portion (121) is slidably embedded in the avoidance groove (1303) and abuts against the second support portion (122).

8. The oven according to claim 7, wherein the cooking plate (130) is provided with a first bearing surface (1301) and a second bearing surface (1302) opposite to each other, and when the first bearing surface (1301) faces upward, the avoidance groove (1303) is offset from a position where the first support portion (121) is located; when the second bearing surface (1302) faces upward, a position where the avoidance groove (1303) is located corresponds to the position where the first support portion (121) is located, so that the first support portion (121) is capable of being embedded in the avoidance groove (1303).

9. The oven according to claim 7 or 8, wherein a positioning recess (1304) is provided on a periphery of the cooking plate (130);
the oven body assembly (100) further comprises a positioning pin (150) slidably connected to the oven body (120), and the positioning pin (150) is capable of being inserted into the positioning recess (1304) when the cooking plate (130) is in the first mounting position and/or the second mounting position to limit the position of the cooking plate (130) in the heating cavity (1201).

10. The oven according to claim 9, wherein the oven cover assembly (200) further comprises a pressing plate (240) arranged on the cover body (210), and when the cover body (210) is in the first open position, the pressing plate (240) is pressed on an end of the positioning pin (150) facing away from the cooking plate (130) to lock the positioning pin (150) in a position inserted into the positioning recess (1304).

11. The oven according to claim 10, wherein the oven body assembly (100) further comprises a second elastic member (160) arranged on the oven body (120); the second elastic member (160) is connected to the positioning pin (150) and configured to apply an elastic force to the positioning pin (150) in a direction facing away from the cooking plate (130), so as to drive the positioning pin (150) to pop out of the positioning recess (1304) when the cover body (210) is not in the first open position.

12. The oven according to claim 1, wherein the oven further comprises an oil collecting assembly (300), the oil collecting assembly (300) is provided with an oil collecting cavity (3201) and being mounted at a bottom of the oven body (120); and
the bottom of the oven body (120) is provided with an oil discharge hole, and the oil discharge hole communicates the heating cavity (1201) with the oil collecting cavity (3201).

13. The oven according to claim 12, wherein the oil collecting assembly (300) comprises:
a supporting member (310), wherein a bottom of the oven body (120) is provided with a mounting hole (1203), the supporting member (310) is penetrated in the mounting hole (1203), and the supporting member (310) is provided with a ventilation hole (3101) penetrating the supporting member (310) in a vertical direction, the ventilation hole (3101) communicates the heating cavity (1201) with an external space; and
an oil cup (320), the oil cup (320) comprises a base (321), an outer peripheral portion (322) and an inner peripheral portion (323), wherein the base (321) is annular, the outer peripheral portion (322) is arranged around an outer circle of the base (321), and the inner peripheral portion (323) is arranged around an inner circle of the base (321), so that the base (321), the outer peripheral portion (322) and the inner peripheral portion (323) are jointly arranged to form the oil collecting cavity (3201); and the inner peripheral portion (323) is slidably sleeved on the supporting member (310) in the vertical direction.

14. The oven according to claim 13, wherein the inner peripheral portion (323) is threadedly connected to the supporting member (310).

15. The oven according to claim 13, wherein one of the inner peripheral portion (323) and the supporting member (310) is provided with a matching groove (3102), and another one of the inner peripheral portion (323) and the supporting member (310) is provided with a matching protrusion (3231), and the matching protrusion (3231) is slidably arranged in the matching groove (3102); and
wherein the matching groove (3102) comprises a first matching section (3102a) and a second matching section (3102b), the first matching section (3102a) extends along an axial direction of the inner peripheral portion (323), and the second matching section (3102b) extends along a circumferential direction of the peripheral portion and is communicated to a top of the first matching section (3102a).

16. The oven according to claim 15, wherein the matching groove (3102) further comprises a third matching section (3102c), the third matching section (3102c) extends in a spiral shape, and one end of the third matching section (3102c) is communicated to the first matching section (3102a), and an other end is opened on a side facing away from the oven body (120).

17. The oven according to any one of claims 13-16, wherein the oil collecting assembly (300) further comprises an oil shield (330) disposed in the heating cavity (1201), a top surface of the oil shield (330) is an arc surface protruded upwardly, and the oil shield (330) is located above the supporting member (310) and connected to the supporting member (310) and/or the oven body (120), and a projection of the oil shield (330) on a top of the supporting member (310) completely covers an opening of the ventilation hole (3101).

18. The oven according to any one of claims 1-8 and 12-15, wherein the cover body (210) is provided with a vent (2103);
the oven cover assembly (200) further comprises an adjusting sheet (250), the adjusting sheet (250) is movably connected to the cover body (210) to be able to close the vent (2103), to cover a part of the vent (2103) or to offset from one side of the vent (2103).

19. The oven according to any one of claims 1-8 and 12-15, wherein the oven further comprises a heating assembly (400), and the heating assembly (400) is arranged on the oven body (120) and/or the bracket (110).
